Europäisches Patentamt

European Patent Office

Office européen des brevets

(19)

(11) Veröffentlichungsnummer: **0 268 225 B1**

# EUROPÄISCHE PATENTSCHRIFT

(45) Veröffentlichungstag der Patentschrift: **08.01.92**

(21) Anmeldenummer: **87116775.5**

(22) Anmeldetag: **13.11.87**

Die Akte enthält technische Angaben, die nach dem Eingang der Anmeldung eingereicht wurden und die nicht in dieser Patentschrift enthalten sind.

(51) Int. Cl.⁵: **C02F 3/12**, C02F 3/10, C02F 3/28

(54) **Verfahren und Einrichtung zum biologischen Reinigen von Abwasser.**

(30) Priorität: **20.11.86 AT 3099/86**

(43) Veröffentlichungstag der Anmeldung:
**25.05.88 Patentblatt 88/21**

(45) Bekanntmachung des Hinweises auf die Patenterteilung:
**08.01.92 Patentblatt 92/02**

(84) Benannte Vertragsstaaten:
**AT BE CH DE ES FR GB GR IT LI LU NL SE**

(56) Entgegenhaltungen:
**EP-A- 0 090 450       EP-A- 0 162 796
DE-A- 3 502 272       FR-A- 2 272 043
US-A- 4 009 099       US-A- 4 039 438
US-A- 4 315 823**

(73) Patentinhaber: **WAAGNER-BIRO AKTIENGE-SELLSCHAFT
Stadlauer-Strasse 54 Postfach 11
A-1221 Wien(AT)**

(72) Erfinder: **Berger, Josef, Dipl. Ing.
Heimgasse 17
A-8561 Köflach-Pichling(AT)**
Erfinder: **Schweiger, Helmut
Ursprungweg 41
A-8045 Graz(AT)**
Erfinder: **Glasner, Alfred, Dipl.-Ing.**

**A-8162 Passail 237(AT)**
Erfinder: **Prutsch, Werner, Dipl.-Ing.**

**A-8473 Lichendorf 111(AT)**

(74) Vertreter: **Wallner, Gerhard, Dipl.-Ing.
Waagner-Biro Aktiengesellschaft Patentrefe-rat Postfach 11
A-1221 Wien(AT)**

## Beschreibung

Die Erfindung betrifft ein Verfahren zum biologischen Reinigen von Abwasser in einem Reaktionsraum durch auf einem Trägermaterial angesiedelte aktive Biomasse, die in einer Flüssigkeit suspendiert wird, wobei die entstehende Suspension mittels eines Flüssigkeitsstromes oder einer Kombination von Flüssigkeits- und Gasstrom über den Eintrittsquerschnitt des Reaktionsraumes verteilt, entgegen der Schwerkraft durch den Reaktonsraum gefördert, am Austritt aus dem Reaktionsraum vom Flüssigkeitsstrom getrennt und zumindest teilweise dem unteren Bereich des Reaktionsraumes wieder zugeführt wird, wobei als Trägermaterial mikrobiologisch abbaubares Material pflanzlichen Ursprungs, mit einer ideellen Korngröße von 0,1 bis 5 mm verwendet wird, welches durch mikrobiologischen Bewuchs ein spezifisches Gewicht größer als Wasser im Bereich 1,01 bis 1,2 aufweist und als Suspension mit gleichmäßiger absoluter Trockensubstanz-Konzentration in den Reaktor eingebracht und nach einer Sedimentation im Reaktor erneut aufgewirbelt wird, und einer Anlage zur Durchführung Verfahrens.

Es ist verfahrens- und einrichtungsmäßig bekannt, einen Tropfkörper vorzusehen, der im wesentlichen aus mehreren Scheiben oder Rohren besteht, die eine Walze bilden, welche ständig gedreht wird, wodurch ein ständiger Wechsel von Begasung und Befeuchtung des Tropfkörpers erreicht wird, an dem die aktive Biomasse angesiedelt ist. Nachteilig bei diesem Verfahren ist die Unregelmäßigkeit des Wuchses der aktiven Biomasse, wodurch es zu Unwucht im Tropfkörper kommt, so daß die Antriebsenergie sich wesentlich vergrößert. Ein weiterer Nachteil ist die Entgasung der am Tropfkörper angesiedelten aktiven Biomasse. Aus der DE-A-3 502 272 ist ein Füllkörperreaktor zum Reinigen von Abwasser unter Verwendung von Holz als Trägermaterial für aktive Biomasse bekannt, wobei die Füllkörper ein spezifisches Gewicht von 1 bis 1,2 aufweisen und damit in der Flüssigkeit schweben, insbesondere bei einer Kreislaufströmung der Flüssigkeit.

Aus der EP-A-0 090 450 ist ein ähnlicher Reaktor bekannt, dessen Biomasse abwechselnd sedimentiert bzw. in Schweben gebracht wird. In keinem Verfahren wird eine kontinuierliche Erneuerung des Füllkörpereinsatzes als Voraussetzung des kontinuierlichen Reinigungsverfahrens vorausgesetzt.

Die Erfindung hat es sich zur Aufgabe gestellt, diesen bekannten Schwierigkeiten zu begegnen und auch die Entsorgung insoweit zu beeinflussen, da, soweit das Trägermaterial nicht selbst biologisch abgebaut wird, dasselbe immerhin einer Verbrennung zugeführt werden kann bzw. das Trägermaterial kontinuierlich oder diskontinuierlich ersetzt wird, ohne daß sich die Schwankungen in der Biologie verfahrenshemmend auswirken. Ein überraschender Erfolg liegt in der besseren Entwässerung des Überschußschlammes und der damit verbundenen Verbesserung bei der Verbrennung desselben.

Das vorliegende erfindungsgemäße Verfahren ist dadurch gekennzeichnet, daß das aus dem Reaktionsraum des Reaktors oder Sedimentationsraum ablaufende mit Mikroorganismen verunreinigte Abwasser durch eine Filterschichte geführt wird, dessen Trägermaterial identisch mit jenem im Reaktionsraum ist, daß durch Überführung des Trägermaterials aus der Filterschichte in den Reaktionsraum der Ausspülung der Mikroorganismen aus dem Reaktionsraum entgegengewirkt wird und ein kontinuierlicher Betrieb gegeben ist. Der erfindungsgemäße Reaktor zur Durchführung des Verfahrens ist dadurch gekennzeichnet, daß der Reaktor einen zumindest zweigeteilten Reaktionsraum, einen Sedimentationsraum und eine Filterschichte aufweist, wobei der Reaktionsraum in eine gasreiche und eine gasarme Zone unterteilt ist, die hintereinander geschaltet sind, wobei die Zirkulation in der gasarmen Zone durch eine Rückführpumpe in die gasreiche Zone, in welche Gas eingeblasen wird, gegeben ist.

Die vorliegende Erfindung hat gegenüber den bekannten Verfahren den Vorteil, daß praktisch der ganze Reaktionsraum ständig durchmischt wird, so daß derselbe relativ klein gehalten werden kann. Durch die ständige Bewegung der Flüssigkeit im Reaktionsbehälter werden Abscheidungen des Feststoffteiles und damit Verstopfungen vermieden, was besonders bei Abwässern mit erhöhtem Feststoffanteil, wie z.B. faserbelastetes Zellstoffabwasser, von Bedeutung ist. Der kontinuierliche Abzug der überschüssigen Biomasse wirkt der Verschlammung entgegen, so daß auch hier mit geringeren Schwierigkeiten gerechnet werden kann. Schließlich ergibt sich durch die ständige Trennung des von Biomasse bewachsenen Trägermaterials von der Flüssigkeit ein Abrieb an Biomasse, der der natürlichen Verdickung des Biofilms am Trägermaterial entgegenwirkt, so daß Diffusionslimitierungen ebenfalls entgegengewirkt wird. Der ideelle Durchmesser des Trägermaterials soll in der Größenordnung 0,1 bis 5 mm sein, wobei dieser aus dem Volumen des Trägermaterials ermittelt wird, und dieses Volumen einem ideellen Kugelvolumen gleichgesetzt wird, dessen Durchmesser aus der Formel

$$d = \sqrt[3]{\frac{6\,V}{\pi}}$$

abgeleitet wird.

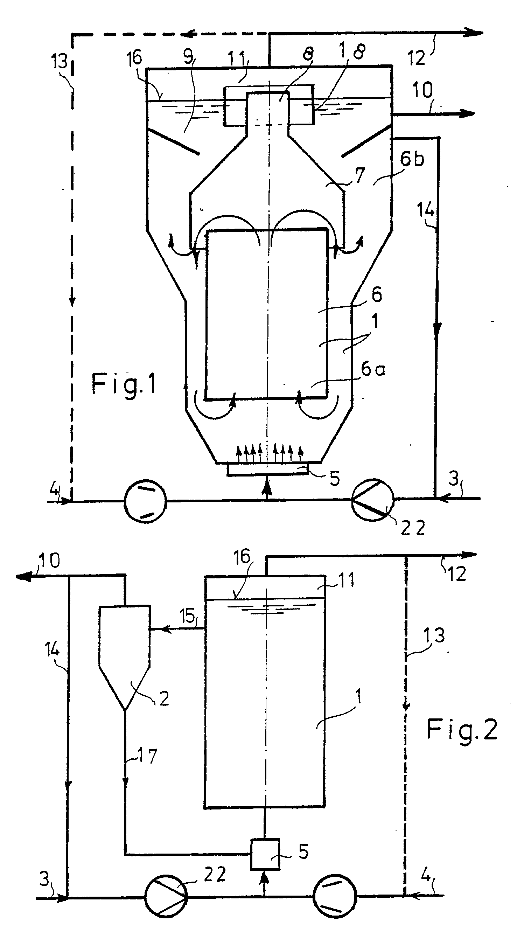

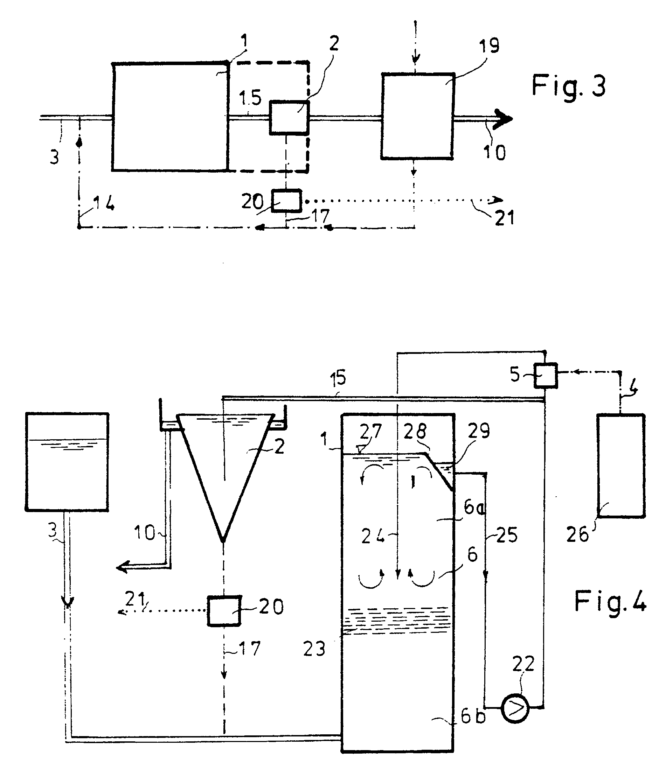

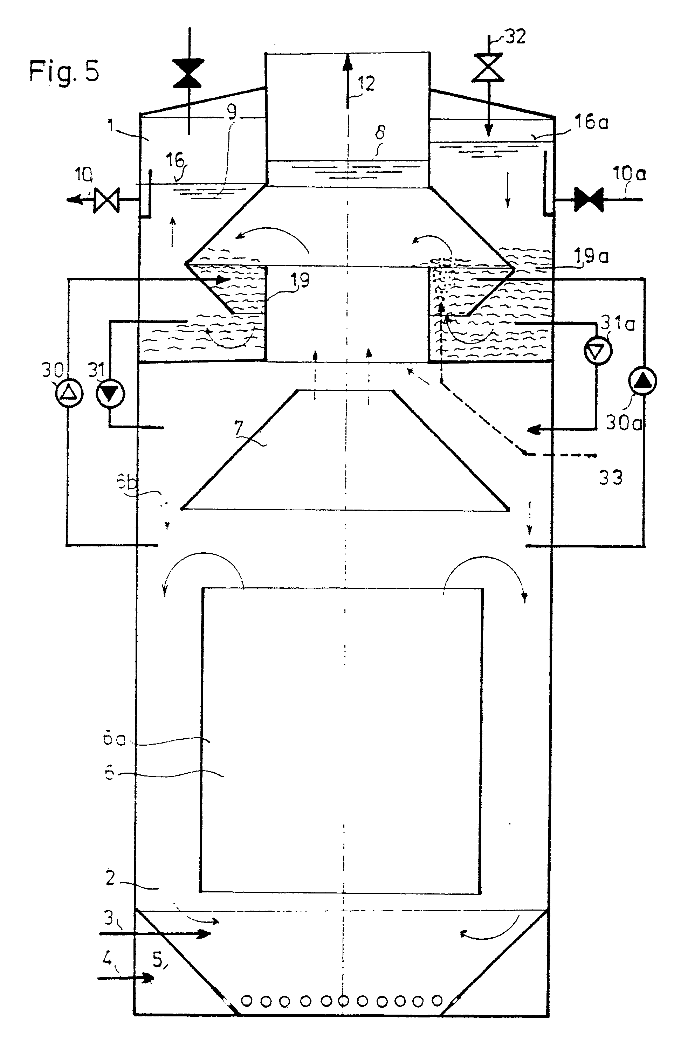

Die Erfindung wird anhand von fünf Schaltbildern in der angeschlossenen Zeichnung beispielsweise erklärt. Fig. 1 offenbart einen Kompaktreaktor, Fig. 2 offenbart eine Schaltungsvariante zur Fig. 1, bei der der Reaktor in mehrere Teilapparate zerlegt ist, Fig. 3 ein Schaltbildschema und Fig. 4 eine weitere Variante des Reaktors mit dessen angeschlossenen Einrichtungen. Fig. 5 zeigt eine Kombination der Fig. 1 mit dem Schema nach Fig. 3.

In Fig. 1 ist ein Reaktor 1, insbesondere Kompaktreaktor, schematisch dargestellt, bei dem eine Flüssigkeit über den Zufluß 3 und die Rückführpumpe 22 sowie ein Gas über die Leitung 4 in die Mischkammer 5 des Reaktors 1 eingeleitet werden, wobei die Mischkammer 5 im Bodenbereich des Reaktors 1 angesiedelt ist. Das Flüssigkeits-Gas-Gemisch, welches aus der Mischkammer 5 austritt, wirkt als Fluidisierungsmittel der im Reaktor befindlichen Flüssigkeit, wobei in einem zylindrischen Reaktionsraum 6 durch aufsteigende Gasblasen eine Mammutpumpenwirkung entsteht, bei der die Flüssigkeit vom unteren Teil des Reaktors 1 in den oberen Teil zum Flüssigkeitsspiegel 16 gehoben wird. Im Mittelbereich des Reaktors 1 am Übergang zur Haube 7 ist eine plötzliche Querschnittserweiterung des zylindrischen Raumes vorgesehen. Die sich verengende Haube 7 weist eine zentrale Öffnung 8 auf, durch die das überschüssige Gas abgeschieden wird. Die Flüssigkeit wird zum Teil an der Stelle der plötzlichen Querschnittserweiterung der Haube nach unten abgelenkt und steigt teilweise in Richtung des Ablaufes 10 nach oben in eine ringförmige Beruhigungszone 9, in der etwaige Feststoffe sedimentiert werden. Der Feststoff sinkt nach unten, bleibt dabei in der Flüssigkeit suspendiert, und wird im unteren Teil des Reaktors durch das aufsteigende Gas-Flüssigkeits-Gemisch wieder gehoben bzw. mit dem Reaktorinhalt durchmischt. In diesem Sinn bleibt der Feststoff länger in Flüssigkeitskontakt und wird mit der Zeit von der aktiven Biomasse besiedelt, wobei die abwechselnde Be- und Entgasung die Lebensbedingungen des Bewuchses steuert, der letzten Endes die Reinigung des Abwassers bewirkt. Dieser Feststoffteil ist ein Material pflanzlichen Ursprungs, wie beispielsweise zerkleinerte Rinde, Hackschnitzel, Sägespäne oder auch gehacktes Stroh, welches während des Reaktorbetriebes infolge des Ligningehaltes schwer oder nur teilweise von selbst, auf jeden Fall langsamer als der Schmutz in der Flüssigkeit, durch die biologischen Kräfte zerstört wird, und daher entsprechend zu ersetzen ist. Das pflanzliche Feststoffmaterial ist mit biologischem Bewuchs durch Lagerung im Abwasser oder durch Verwendung als Filtermaterial insbesondere in der Filterschichte 19 - siehe Fig. 3 oder 5 -, imprägniert worden, wodurch das spezifische Gewicht in der Größenordnung 1,01 bis 1,2 angehoben wurde, so daß das Material leicht sedimentiert und durch diese Bewegung wieder in den Bereich der Zuführung für den gasreichen Teil des Reaktor gelangt. Diese Eigenschaft schlägt auch bei der Abscheidung des Überschußschlammes durch, indem der Überschußschlamm durch das pflanzliche Feststoffmaterial bei besseren Bedingungen, beispielsweise größerem Wirkungsgrad und geringerem Wassergehalt, verbrannt werden kann. Bei diesem Reaktortyp stellt die Höhe des zylindrischen Reaktionsraumes 6 eine wesentliche Verfahrensgröße dar, da durch die Mammutpumpenwirkung eine ständige Umwälzung der Flüssigkeit mit dem Trägermaterial vor einer Stelle höheren hydrostatischen Druckes (unten) bewirkt wird, wo die Löslichkeit von Gas in der Flüssigkeit höher ist als bei niedrigem hydrostatischem Druck (oberer Teil des zylindrischen Raumes 6), wodurch es automatisch zu einer ständigen Begasung und Entgasung der Flüssigkeit kommt. Das bei der Entgasung entstehende Abgas entweicht zusammen mit Überschußgas durch die Haube 7 nach oben und bildet im oberen Teil des Reaktors 1 ein Abgaspolster 11, von dem es über die Abgasleitung 12 abgeführt wird. Gegebenenfalls kann über die Rezirkulationsleitung 13 ein Teil des Abgases in die Gasleitung 4 rückgeführt werden, was insbesondere bei anaerober Prozeßführung im Reaktor 1 wesentlich ist. Bei aerober Prozeßführung wird als Gas Luft oder Sauerstoff verwendet und durch die Abgasleitung 12 ein Sauerstoff-$CO_2$-Gemisch abgeführt, welches bei Verwendung von Luft naturgemäß auch einen Stickstoffanteil aufweist. Bei anaeroben Prozessen besteht das Abgas aus Biogas hauptsächlich aus Methan, und es wird als Gas in der Leitung 4 ein nicht sauerstoffhältiges Gas aus der Rezirkulationsleitung 13, also beispielsweise das rezirkulierte Biogas, verwendet. Als Zufluß für die Flüssigkeit wird die zu reinigende Flüssigkeit (Abwasser) verwendet, wobei auch hier eine rezirkulierte Flüssigkeitsmenge aus der Leitung 14 zugemischt werden kann.

Die Schaltung gemäß Fig. 1 eignet sich besonders für Trägerkörper mit größerem ideellem Durchmesser, z.B. für Hackschnitzel, wobei durch die Höhenverschiebbarkeit der Haube 7 die Strömung in diesem bzw. im Spalt zum Gehäuse und/oder zylindrischem Raum 6 beeinflußt werden kann, indem durch Absenken der Haube 7 unter den Überlauf der zentralen Öffnung 8 der Haube 7 der Mammutpumpe, hervorgerufen durch den Dichtenunterschied in der aufsteigenden Strömung zur analogen Fallströmung der entgasten Flüssigkeit auch der Innenraum der Haube 7 von der Steigströmung erfaßt wird und die Flüssigkeit über die zentrale Öffnung 8 in die Beruhigungszone 9 überfließt. Um nun in der Beruhigungszone 9 die zur Absetzung und Entgasung notwendige Strömungsberuhigung zu erreichen, sind Tauchringe 18 vorgesehen, die die Wirkung eines Lamellenklärers haben und die Absetzung erleichtern.

In Fig. 2 ist in vereinfachter Darstellung eine Konstruktionsvariante zur Fig. 1 dargestellt, bei der der Reaktor 1 von einem praktisch einbaulosen zylindrischen Raum gebildet ist, an dessen Unterseite das Gas-Flüssigkeits-Gemisch aus der Mischkammer 5 in den Reaktor eingeblasen wird. Durch die Anordnung des Ablaufes 10 infolge Überführungsleitung 15 für die Feststoff enthaltende Flüssigkeit wird im Reaktor 1 ein Flüssigkeitsspiegel 16 eingestellt, ob dem sich ein Abgaspolster 11 ausbildet, von dem die Abgasleitung 12 abzweigt. Die Überführungsleitung 15 führt zu einem außerhalb des Reaktors 1 angeordneten Sedimentationsraum 2, wie z.B. Klärer oder Lamellenabscheider oder Zyklon, wo durch Trägheitswirkung und/oder Schwerkraftwirkung die Biomasse und die Flüssigkeit voneinander getrennt werden und auch eine Entgasung stattfindet. Der Sedimentationsraum 2 weist abzweigend vom Ablauf 10 eine Leitung 14 für die rezirkulierte Flüssigkeit auf, die zur Mischeinrichtung 5 führt. Für den abgeschiedenen Festkörperanteil ist eine Leitung 17 vorgesehen, welche den Feststoffanteil in die Mischkammer 5 transportiert, wo er mit dem Gas-Flüssigkeitsgemisch in innigen Kontakt tritt. Auch dieser Reaktor ist sowohl für den anaeroben wie aeroben Betrieb geeignet. Bei dieser Ansführung ist der Reaktor 1 über seinen ganzen Querschnitt mit einem turbulenten Fließbett ausgefüllt, das durch die kinetische Energie des treibenden Flüssigkeitsstrahles oder auch Flüssigkeits-Gas-Gemisch-Strahles umgewälzt wird. Die turbulente Strömung wird hauptsächlich durch die Mammutpumpenwirkung unterstützt, so daß ein intensiver Stoffaustausch zwischen dem Biofilm auf dem Trägermaterial und der umströmenden Flüssigkeit bzw. Flüssigkeits-Gas-Gemisch erreicht wird. Totzonen mit stagnierender Flüssigkeitsströmung können hiebei kaum auftreten. Durch die ständige Wiederholung des Prozesses wachsen am Trägermaterial die sessilen Bakterien und auch Protozoen, wie Glockentierchen, als Aufwuchskörper und verhindern dadurch ein Ausschwemmen dieser Mikroorganismen aus dem Reinigungssystem, so daß insbesondere beim anaeroben Betrieb die notwendige enge räumliche Symbiose von säurebildenden und methanbildenden Bakterien sichergestellt ist.

Durch das Mitbewegen des mit dem Biofilm bewachsenen Trägers mit der Flüssigphase im Reaktionsraum und dem bei diesem Verfahren vorzugsweise angewendeten leichten Trägermaterial wird die Relativgeschwindigkeit zwischen Flüssigphase und Biofilm und damit die auf den Biofilm wirkende Scherbeanspruchung verringert. Dies ist vor allem bei anaerobem Betrieb für die Symbiose von säurebildenden und methanbildenden Bakterien von Bedeutung. Durch das ständige Durchlaufen des Reaktionsraumes wird verhindert, daß sich jeweils ein Teil der trägerfixierten Biomasse am gut mit Sauerstoff und Subtrat versorgten Boden des Reaktors und der andere Teil am zumindest mit Sauerstoff unterversorgten Kopf des Reaktors befindet, ohne in nennenswerter Weise axial durchmischt zu werden. Bei diesem Verfahren wird dagegen in der Mischungszone immer wieder "neue" Biomasse der mit Substrat und im aeroben Betrieb auch mit Sauerstoff angereicherten Flüssigphase zugeführt. Ein weiterer Vorteil besteht in dem leichteren Durchschleusen von festen, nicht abbaubaren Abwasserinhaltsstoffen durch den Reaktionsraum.

Durch die Fördermöglichkeit über den Flüssigkeitsstrahl kann die Gasmenge unabhängig von hydraulischen Gesichtspunkten gewählt und bei Aerobbetrieb auf die benötigte Sauerstoffmenge hin optimiert werden. Durch den Wechsel der trägerfixierten Biomasse zwischen dem unteren und dem oberen Teil des Reaktors wird diese einem ständigen Druckwechsel ausgesetzt; dadurch werden infolge des höheren Druckes im unteren Teil des Reaktors Absorptionsvorgänge (Aufnahme von $O_2$) und des niedrigeren Drukkes im oberen Teil des Reaktors Desorptionsvorgänge (Abgabe von $CO_2$, $CH_4$, $H_2$ etc.) begünstigt. Wird die am Träger pflanzlichen Ursprunges haftende überschüssige Biomasse abgezogen, ist durch den Träger eine bessere Entwässerbarkeit und Entsorgbarkeit (beispielsweise Verbrennung des Sägespäne-Schlamm-Gemisches) gegeben.

Trotz der guten Haftung am Trägermaterial kommt es zu einem Verlust an Biomasse, der den kontinuierlichen Betrieb erschwert. Es ist daher im Ablauf 10 des Reinwassers nach dem Sedimentationsraum 2 eine Filterschichte 19 (Fig. 3) vorgesehen, die im wesentlichen aus demselben Trägermaterial, wie es im Reaktionsraum 6 verwendet wird, gebildet ist und die die im Reinwasser noch schwebende Biomasse festhält, wodurch die Filterschichte mit Biomasse versetzt und angereichert wird. Diese Filtermasse eignet sich besonders für den Ersatz der biologisch verbrauchten Trägermaterialien im Reaktionsraum und wird daher entsprechend dem Bedarf in den Reaktionsraum eingebracht, während die fehlende Filtermasse durch reines, frisches Trägermaterial ersetzt wird. Das Trägermaterial ist pflanzlichen Ursprungs und infolge seines Ligningehaltes schwer biologisch abbaubar. Hiezu werden hauptsächlich Sägespäne, Hackschnitzel, gehäckseltes Stroh, u.ä. in der Korngröße zwischen 0,1 und 5 mm verwendet. In Fig. 3 ist ferner eine Schlammpresse 20 eingezeichnet, von der der Überschußschlamm über die Leitung 21 mit dem anteiligen Feststoffmaterial abgezogen wird. Dieses Feststoffmaterial/-Schlamm-Gemisch läßt sich leicht entwässern und ist infolge seines hohen biologischen Materialanteils leicht verbrennbar. Das anfallende Auspresswasser wird über die Leitung 14 rezirkuliert.

Während in Fig. 1 und Fig. 2 das Gemisch aus Abwasser und Trägermaterial begast wird, wird gemäß Fig. 4 praktisch nur der am Trägermaterial verarmte Teil des Reaktors begast. In beiden Fällen unterscheidet man unter besser und weniger gut durchgasten Teilen des Reaktors, die schaltungsmäßig unterschiedlich angeordnet sind. Die Schaltung nach Fig. 4 bestict durch die geringen Einbauten, wobei allerdings im Unterschied zu Fig. 1 die Sedimentationseinrichtung 2 außerhalb des Reaktors 1 angeordnet ist, also relativ leichte und pumpengängige feinkörnige Trägermaterialien wie Sägespäne und/oder Strohstaub Verwendung finden oder die bereits biologisch weitgehend abgebauten Trägermaterialien mit dem Überschußschlamm ausgeschleust werden. In Fig. 4 ist der Reaktor 1 zweigeteilt, wobei die Teilung durch eine Schwebeschicht 23 an imprägniertem Trägermaterial gekennzeichnet ist, die durch den Zufluß 3 im Reaktorteil 6b am Sedimentieren gehindert ist und von unten durch Rückfluß aus dem Sedimentor bzw. der Schlammpresse 20 verstärkt wird, während von oben durch das durchflossene Tauchrohr 24 und die resultierende Strömung ein Abbau der obersten Schichte gegeben ist. Die Ansaugleitung 25 der Umwälzpumpe 22 saugt aus dem oberen Teil 6a des Reaktors 1 mehr Flüssigkeit ab als durch die Mischkammer 5 und das Tauchrohr 24 dem Reaktor 1 zugeführt wird, wodurch die Schwebeschichte 23 angehoben wird. Die Differenzmenge wird durch die Leitung 15 dem Sedimentationsraum 2 zugeführt. Die Mischkammer 5 ist durch die Leitung 4 mit dem Druckgasbehälter 26 verbunden, so daß in der Mischkammer eine Gas/Flüssigkeitsmischung erzeugt wird, die durch das Tauchrohr 24 in den Reaktor 1 unter den Flüssigkeitsspiegel 27 eingebracht wird und dort durch die Strömungsenergie und Blasenbildung des in der Mischkammer 5 im Überfluß eingemischten Gases bei dessen Druckentlastung eine durch Mammutpumpenwirkung verstärkte Aufwärtsströmung im Reaktor 1 bewirkt, die Sekundärströmungen bzw. Umwälzungen in der gasreichen Zone 6a des Reaktors 1 ermöglichen. Die umgewälzte Flüssigkeit entgast im Bereich des Flüssigkeitsspiegels 27 und fällt über die Rinnenwand 28 in ein Sammelbecken 29, welches als Pumpensumpf für die Umwälzpumpe 22 dient. Fig. 5 zeigt einen Kompaktreaktor mit im Reaktor 1 integrierter Filterschichte 19, wobei die linke Seite die Filterschichte 19 im Filtrierungszustand und die rechte Seite die Filterschichte 19a im Rückspülzustand zeigt. Der untere Teil 6a des Reaktionsraumes 6 funktioniert wie in Fig. 1 beschrieben, wobei der Sedimentationsraum 2 im ringförmigen Mantelteil des Reaktors (einschließlich Teil 6b) angeordnet ist.

Die Filtrierschichte 19 besteht im wesentlichen aus feuchten Sägespänen, die in einem Trichter angeordnet sind, der von der gasarmen Flüssigkeit in Richtung zum Ablauf 10 durchflossen wird. Hiebei setzen sich mitgenommene Mikroben an den Sägespänen fest, wobei gleichzeitig eine Restklärung auftritt. Die Durchströmung durch das Filter wird durch die 30 erhöht, indem gasarme Flüssigkeit aus dem Ablauf bzw. Rücklauf von Teil 6a zu 6b in das Filter gepresst wird. Bei der Rückspülung (rechte Seite des Schaltbildes) ist die Pumpe 30a funktionslos, wobei die Rückspülpumpe 31a Flüssigkeit aus der Filterschichte 19a in den Rum 6b pumpt, wodurch ein Kreislauf eingestellt wird. Beim Rückspülen werden frische Sägespäne, soweit sie während des Reaktorsbetriebes verbraucht werden, bzw. mit dem Überschußschlamm abgeführt werden, durch die Zuführung 32 zusammen mit Rückspülflüssigkeit aus dem Ablauf 10 der Beruhigungszone zugeführt, so daß der Flüssigkeitsspiegel 16a steigt und damit auch der hydrostatische Druck entsprechend zunimmt, so daß der Filtrierungsdruck beim Rückspülen erhöht wird. Dadurch steigt natürlich auch der Flüssigkeitsspiegel 16 in der Öffnung 8 der Haube 7 an, die Rückspülpumpe 31 auf der linken Seite ist im Normalbetrieb nicht in Funktion und daher schwarz eingezeichnet. Ebenso ist beim Rückspülen (im rechten Teil Schaltbild) der Ablauf 10a nicht in Betrieb und daher schwarz eingezeichnet. Beim Rückspülen werden ferner einige Sägespäne mehr oder weniger kontinuierlich aus der Filterschichte 19a in das Innere des Reaktors rückgespült, wobei sie in die Randzone geführt werden und so über den Sedimentationsraum 2 dem gasblasenreichen Teil 6a des Reaktionsraumes 6 zugeführt werden, wo sie der eigentlichen Biologie als Füllkörper bzw. Trägermaterial für die biologische Masse in Ersatz zu dem mit dem Über-schußschlamm ausgetragenen Trägermaterial zu-geführt werden. Zur Verbesserung und Intensivierung der Rückspülung kann noch Preßluft über die Leitung 33 in den aufsteigenden Strom eingeblasen werden.

Wenngleich der bis jetzt beschriebene Reaktor für sich betriebsfähig ist und als Hochleistungsreaktor ausgelegt ist, kann es von Vorteil sein, mehrere gleichartige Reaktoren als Stufen hintereinander zu schalten und mit gleichartigem Trägermaterial zu versehen, wobei sowohl Aerob-Stufen als auch abwechselnd Anaerob- und Aerobstufen, je nach Abwassertyp, als biologische Nachreinigungsstufen Verwendung finden können.

**Patentansprüche**

1. Verfahren zum biologischen Reinigen von Abwasser in einem Reaktionsraum (6) durch auf einem Trägermaterial angesiedelte aktive Biomasse, die in einer Flüssigkeit suspendiert wird, wobei die entstehende Suspension mittels eines Flüssigkeitsstromes oder einer Kombination von Flüssigkeits- und Gasstrom über den Eintrittsquerschnitt des Reaktionsraumes verteilt, entgegen der Schwerkraft durch den Reaktionsraum (6) gefördert, am Austritt aus dem Reaktionsraum vom Flüssigkeitsstrom getrennt und zumindest teilweise dem unteren Bereich des Reaktionsraumes wieder zugeführt wird, wobei als Trägermaterial mikrobiologisch abbaubares Material pflanzlichen Ursprungs, mit einer ideellen Korngröße von 0,1 bis 5 mm verwendet wird, welches durch mikrobiologischen Bewuchs ein spezifisches Gewicht größer als Wasser im Bereich 1,01 bis 1,2 aufweist und als Suspension mit gleichmäßiger absoluter Trockensubstanz-Konzentration in den Reaktor eingebracht und nach einer Sedimentation im Reaktor erneut aufgewirbelt wird, dadurch gekennzeichnet, daß das aus dem Reaktionsraum (6) des Reaktors (1) oder Sedimentationsraum (2) ablaufende mit Mikroorganismen verunreinigte Abwasser durch eine Filterschichte (19) im oberen Bereich des Reaktors (1) oder im Bereich des Ablaufes (10) des Reinwassers geführt wird, dessen Trägermaterial identisch mit jenem im Reaktionsraum (6) ist, daß durch Überführung des Trägermaterials aus der Filterschichte (19) in den Reaktionsraum (6) der Ausspülung der Mikroorganismen aus dem Reaktionsraum entgegengewirkt wird und ein kontinuierlicher Betrieb gegeben ist.

2. Verfahren nach Anspruch 1, dadurch gekennzeichnet, daß die Sedimentation des Trägermaterials in einem vom Reaktionsraum (6) getrennten Sedimentationsraum (2) erfolgt und das Sediment in den Reaktor zurückgeführt wird

3. Verfahren nach Anspruch 1, dadurch gekennzeichnet, daß der Sauerstoffgehalt der Suspension in mindestens einem Teil der äußeren Zone im Bereich der Filterschichte 19a durch mengengesteuerte Rückführung der Suspension mittels der Pumpe 31a in die Zone (6b) geregelt wird und die nachströmende Suspension aus der gasblasenführenden Zone (6a) den Sauerstoffeintrag bewirkt.

4. Verfahren nach Anspruch 1, dadurch gekennzeichnet, daß bei aerobem Betrieb Luft oder Sauerstoff oder mit einem Teilstrom des Abgasstromes gemischte Luft oder Sauerstoff zur Begasung am Eintritt in den Reaktionsraum eingeblasen wird und dem Reaktionsraum eine oder mehrere biologische Reinigungsstufen nachgeschaltet werden.

5. Verfahren nach Anspruch 1, dadurch gekennzeichnet, daß bei anaerobem Betrieb ein Teilstrom des als Abgas anfallenden Biogases zur Fluidisierung am Eintritt in den Reaktionsraum eingeblasen wird und daß dem Reaktionsraum eine oder mehrere biologische Reinigungsstufen, insbesondere nach dem Aerob-Verfahren, nachgeschaltet sind.

6. Verfahren nach Anspruch 1, dadurch gekennzeichnet, daß die Flüssigkeit und das die Biomasse tragende Material am Austritt aus dem Reaktionsraum (6) durch Trägheitskräfte und/oder Schwerkraftwirkung bei gleichzeitiger Entgasung getrennt werden.

7. Anlage zur Durchführung des Verfahrens nach den Ansprüchen 1 bis 6, dadurch gekennzeichnet, daß der Reaktor (1) einen zumindest zweigeteilten Reaktionsraum (6), einen Sedimentationsraum (2) und eine Filterschichte (19) aufweist, wobei der Reaktionsraum (6) in zwei Zonen (6a, 6b) unterteilt ist, die hintereinander geschaltet sind, und eine Rückführpumpe (22) aus der Zone 6b in die Zone (6a), in welche Gas eingeblasen wird, vorgesehen ist.

8. Anlage nach Anspruch 7, dadurch gekennzeichnet, daß der Reaktionsraum durch Einbauten (Haube 7) in eine innere und eine äußere Zone (6a, 6b) unterteilt ist, die eine getrennte Zirkulation der Suspension aufweisen.

9. Anlage nach Anspruch 7, dadurch gekennzeichnet, daß zur Trennung des die Biomasse tragenden Materials vom Flüssigkeitsstrom ein Zyklon , insbesondere außerhalb des Reaktors (1), oder ein ringförmiger, um den Reaktionsraum, innerhalb des Reaktors angeordneter Sedimentationsraum (2) vorgesehen ist, der als Klärer oder Lamellenabscheider ausgebildet ist, und in dem die Filterschichte (19) angeordnet ist.

## Claims

1. Process of biological purification of waste water in a reaction chamber (6) by means of active biomass which is suspended in a liquid, whereby the produced suspension is distributed over the entrance cross-section of the reaction chamber by means of a stream of liquid or a combined stream of gas and liquid, is transported through the reaction chamber (6) against gravity, is separated from the stream of liquid at the outlet of the reaction chamber and is at least partly recycled to the lower part of the reaction chamber, whereby the carrier material is microbiologically degradable and of vegetable origin with an ideal grain size of between 0.1 and 5 mm which due to microbiological growth has a higher volume weight than water between 1.01 and 1.2 and is fed into the reactor as a suspension with an absolutely uniform dry solid matter concentration and after sedimentation is whirled up again in the reactor, characterized in that the waste water which runs off the reaction chamber (6) of the reactor (1) or the sedimentation chamber(2), and which is contaminated with microorganisms, is led through a filtering layer (19) in the upper part of the reactor (1) or in the area of the clean water outlet (10) and in that the carrier material is identical with that in the reaction chamber (6) and in that the transfer of the carrier material from the filtering layer (19) into the reaction chamber (6) counteracts the rinsing of the microorganisms from the reaction chamber and in that continuous operation is achieved.

2. Process according to claim 1 characterized in that the sedimentation of carrier material is carried out in a sedimentation chamber (2) which is separated from the reaction chamber (6) and that the sediment is recycled to the reactor.

3. Process according to claim 1 characterized in that the oxygen content of the suspension is controlled in at least one part of the outer zone in the area of the filtering layer 19a by quantity-controlled recycling of the suspension by pump 31a into the zone 6b and the following suspension from the zone containing gas bubbles (6a) causes the transfer of oxygen.

4. Process according to claim 1 characterized in that during aerobic operation air or oxygen or a mixture of air or oxygen with a partial waste gas flow is injected for gasification at the entrance of the reaction chamber and one or several purification stages are connected downstream of the reaction chamber.

5. Process according to claim 1 characterized in that during anaerobic operation a partial flow of the biogas which is produced as a waste gas is injected at the entrance of the reaction chamber for fluidizing purposes and that one or several biological purification stages are connected downstream of the reaction chamber, particularly according to the aerobic process.

6. Process according to claim 1 characterized in that the liquid and the material carrying the biomass are separated by means of inertia and/or gravity at the outlet of the reaction chamber (6) with simultaneous degassing.

7. Plant for carrying out the process according to claims 1 to 6 characterized in that the reactor (1) is equipped with a reaction chamber (6) comprising at least two compartments and is provided with a sedimentation chamber (2) and a filtering layer (19) whereby the reaction chamber (6) is divided into two zones (6a, 6b) which are connected one behind the other and a recirculating pump (22) from zone 6b to zone 6a into which gas is injected.

8. Plant according to claim 7 characterized in that the reaction chamber by means of incorporated devices (hood 7) is divided into inner and outer zone (6a, 6b) which are provided with separated circulation of the suspension.

9. Plant according to claim 7 characterized in that for the separation of the material carrying the biomass from the liquid flow a cyclone has been provided particularly outside of the reactor (1) or that inside the reactor a sedimentation chamber (2) has been provided which is arranged as a ring surrounding the reaction chamber and which is built as a clarifier or baffle plate separator and in which the filtering layer (19) is located.

## Revendications

1. Procédé de purification biologique d'eau usée dans une chambre de réaction (6) par une biomasse active qui se trouve sur une matière de support suspendue dans un liquide, la suspension résultante étant distribuée sur toute la section transversale d'entrée de la chambre de réaction moyennant un courant de liquide ou une combinaison de courant de liquide et courant de gaz et transportée contre la gravité à travers la chambre de réaction (6) et séparée du courant de liquide à la sortie de la chambre de réaction et au moins partiellement recyclée dans la partie inférieure de la chambre de réaction, une matière microbiologiquement dégradable et d'origine végétale étant utilisée en tant que matière de support à une grosseur de grain idéale de 0,1 à 5 mm qui par végétation microbiologique possède un poids volumique plus élevé que de l'eau, à savoir entre 1,01 et 1,2 et qui est injectée dans le réacteur en tant que suspension à concentration de matière sèche absolument uniforme et après sédimentation dans le réacteur est fait tourbillonner, caractérisé en ce que les eaux usées qui sortent de la chambre de réaction (6) du réacteur (1) ou de la chambre de sédimentation (2) et qui sont contaminées par des micro-organismes traversent une couche filtrante (19) dans la zone supérieure du réacteur (1) ou dans la zone de la sortie (10) de l'eau pure et que sa matière de support est identique à celle dans la chambre de réaction (6) et que le transfert de la matière de support de la couche filtrante (19) à la chambre de réaction (6) agit contre l'enlèvement des microorganismes de la chambre de réaction et qu'un fonctionnement continu est obtenu.

2. Procédé suivant revendication 1 caractérisé en ce que la sédimentation de la matière de support dans une chambre de réaction (6) se fait dans une chambre de sédimentation séparée (2) et que le sédiment est recyclé dans le réacteur.

3. Procédé suivant revendication 1 caractérisé en ce que la teneur en oxygène de la suspension dans au moins une partie de la zone extérieure dans la région de la couche filtrante 19a est réglée par recyclage de la suspension à commande en fonction de la quantité moyennant la pompe 31a dans la zone 6b et que la suspension suivante qui vient de la zone contenant des bulles de gaz (6a) cause le transfert d'oxygène.

4. Procédé suivant revendication 1 caractérisé en ce qu'en marche aérobie de l'air ou de l'oxygène ou un mélange d'un courant partiel des gaz de fumée et de l'air ou de l'oxygène est injecté à l'entrée de la chambre de réaction pour effectuer la gazéification et qu'une ou plusieurs étages de purification sont connectés en aval de la chambre de réaction.

5. Procédé suivant revendication 1 caractérisé en ce qu'en marche anaérobie un courant partiel du biogaz produit comme gaz de fumée est injecté à l'entrée de la chambre de réaction à des fins de fluidification et qu'une ou plusieurs étages de purification biologique sont connectés en aval de la chambre de réaction, particulièrement suivant le procédé aérobie.

6. Procédé suivant revendication 1 caractérisé en ce que le liquide et la matière de support de la biomasse sont séparés à la sortie de la chambre de réaction (6) par inertie et/ou gravité avec dégazage simultané.

7. Installation d'exécution du procédé suivant les revendications 1 à 6 caractérisée en ce que le réacteur (1) comprend une chambre de réaction (6) divisée en au moins deux parties, une chambre de sédimentation (2) et une couche filtrante (19), la chambre de réaction (6) étant divisée en deux zones (6a, 6b) qui sont connectées l'une derrière l'autre et une pompe de recyclage (22) de la zone 6b à la zone 6a dans laquelle le gaz est injecté.

8. Installation suivant revendication 7 caractérisée en ce que la chambre de réaction par dispositifs incorporés (capot 7) est divisée en une zone intérieure et extérieure (6a, 6b) qui permettent une circulation séparée de la suspension.

9. Installation suivant revendication 7 caractérisée en ce qu'un cyclone est prévu séparant la matière de support de la biomasse du courant de liquide en particulier en dehors du réacteur (1) ou que dans le réacteur et autour de la chambre de réaction une chambre de sédimentation (2) annulaire est arrangée qui est construite comme clarificateur ou séparateur lamellaire et dans lequel se trouve la couche filtrante (19).

Fig.1

Fig.2

Fig. 3

Fig. 4

Fig. 5